# FASCICULE DE BREVET EUROPEEN

(11) **EP 0 924 581 B1**
(45) Date de publication et mention de la délivrance du brevet: **23.04.2003**
(21) Numéro de dépôt: 98204199.8
(22) Date de dépôt: 10.12.1998
(51) Int. Cl.: G04G 5/00, H04B 7/26, H04M 1/72

(54) **Téléphone sans fil et procédé de gestion d'horloge**
Schnurloses Telefon und Verwaltungsmethode eines Zeitgebers
Cordless phone and timer management method

(30) Priorité: 15.12.1997 FR 9715877; 07.01.1998 FR 9800081
(43) Date de publication de la demande: 23.06.1999
(73) Titulaire: Koninklijke Philips Electronics N.V., 5621 BA Eindhoven (NL)
(72) Inventeur: Muller, Nicolas, Société Civile S.P.I.D., 75008 Paris (FR); Lorieau, Christophe, Société Civile S.P.I.D., 75008 Paris (FR)
(74) Mandataire: Chaffraix, Jean

(56) Documents cités:
- DE-A- 19 536 580
- PATENT ABSTRACTS OF JAPAN vol. 018, no. 406 (E-1585), 28 juillet 1994 & JP 06 120881 A (FUJITSU LTD;OTHERS: 01), 28 avril 1994
- PATENT ABSTRACTS OF JAPAN vol. 096, no. 011, 29 novembre 1996 & JP 08 186868 A (CASIO COMPUT CO LTD), 16 juillet 1996
- PATENT ABSTRACTS OF JAPAN vol. 096, no. 004, 30 avril 1996 & JP 07 322346 A (MURATA MACH LTD), 8 décembre 1995

## Description

L'invention concerne un téléphone sans fil comportant au moins une entité de base dotée d'une horloge, une entité de combiné, et des moyens de correction d'horloge.

L'invention concerne également une entité de base, et une entité de combiné destinées à être utilisées dans un tel téléphone.

Elle concerne également un procédé de gestion d'horloges pour téléphone sans fil.

L'invention a d'importantes applications, notamment pour les téléphones sans fil dont l'entité de base est dotée d'une fonction répondeur avec horodatage des messages reçus. Pour de telles applications il est nécessaire de disposer d'une horloge à jour dans la (ou les) entité(s) de base.

L'abrégé de brevet japonais n°A-06 120 881 décrit un téléphone sans fil doté d'une entité de base et d'une entité de combiné qui comportent chacune un circuit d'horloge. L'horloge de la base est contrôlée par un circuit de génération d'horloge prévu dans l'autocommutateur qui relie la base à la ligne téléphonique. Et des moyens de correction d'horloge sont prévus pour corriger l'horloge du combiné à partir de celle de base.

L'invention a pour but de proposer un téléphone sans fil doté d'un système d'horloge autonome, simple et économique.

Pour cela, un téléphone selon l'invention et tel que décrit dans le paragraphe introductif est caractérisé en ce que lesdits moyens de correction d'horloge comportent:
- des moyens de détection d'une perte de ladite horloge par l'entité de base,
- des moyens d'élaboration, par au moins une entité de combiné, d'une information de restitution de ladite horloge,
- des moyens de transmission à l'entité de base, par l'entité de combiné, de ladite information de restitution.

L'invention tire ainsi partie du fait que les combinés sont dotés d'une batterie d'alimentation qui, en cas de coupure secteur, leur donne une autonomie importante. Lorsque l'entité de base a perdu son horloge, par exemple à la suite d'une coupure secteur, une information de restitution peut lui être transmise par les combinés. L'invention permet donc de s'affranchir de l'utilisation d'un composant autonome spécifique de sauvegarde et de comptage dans l'entité de base pour continuer le calcul d'horloge en cas de coupure secteur notamment.

Dans un premier mode de réalisation de l'invention, ladite entité de base comporte une mémoire non volatile de sauvegarde de ladite horloge, et lesdits moyens d'élaboration de l'information de restitution comportent des moyens de calcul du temps écoulé entre la détection de la perte de l'horloge et la transmission de l'information de restitution.

Dans un second mode de réalisation de l'invention, l'entité de combiné est dotée d'une horloge esclave de celle de l'entité de base, pour délivrer ladite information de restitution.

Dans ce mode de réalisation, l'horloge des combinés est maintenue à jour, en fonctionnement normal, par la base. Ce mode de réalisation permet donc de s'affranchir de l'utilisation d'une mémoire non volatile pour sauvegarder régulièrement l'horloge du système. L'utilisation d'une mémoire non volatile présente en effet l'inconvénient suivant: le comptage de la durée d'une coupure secteur par le combiné contient une erreur égale au délai entre la dernière sauvegarde de l'horloge dans la base et le début de la coupure. Pour y remédier on est amené à augmenter le rythme des sauvegardes d'horloges (de l'ordre de quelques secondes). Or le nombre d'écritures dans une mémoire non volatile est limité, ce qui fait qu'au bout d'un certain temps (quelques années) le système d'horloge ne fonctionnera plus correctement.

Enfin, un procédé de gestion d'horloges selon l'invention et tel que décrit dans le paragraphe introductif est caractérisé en ce qu'il consiste à:
- détecter une perte de ladite horloge par l'entité de base,
- élaborer, dans au moins une entité de combiné, une information de restitution de ladite horloge,
- transmettre à l'entité de base, par l'entité de combiné, ladite information de restitution.

L'invention sera mieux comprise et d'autres détails apparaîtront à la lumière de la description qui va suivre en regard des dessins annexés qui sont donnés à titre d'exemple non limitatif et dans lesquels:
- la figure 1 représente schématiquement un exemple de téléphone selon l'invention,
- la figure 2 représente schématiquement le fonctionnement d'un combiné selon l'invention, du point de vue de la gestion d'horloge, dans le premier mode de réalisation de l'invention,
- la figure 3 représente schématiquement le fonctionnement d'une base selon l'invention, du point de vue de la gestion d'horloge, dans le premier mode de réalisation de l'invention,
- la figure 4 représente schématiquement le fonctionnement d'un combiné selon l'invention, du point de vue de la gestion d'horloge, dans le second mode de réalisation de l'invention,
- la figure 5 représente schématiquement le fonctionnement d'une base selon l'invention, du point de vue de la gestion d'horloge, dans le second mode de réalisation de l'invention.

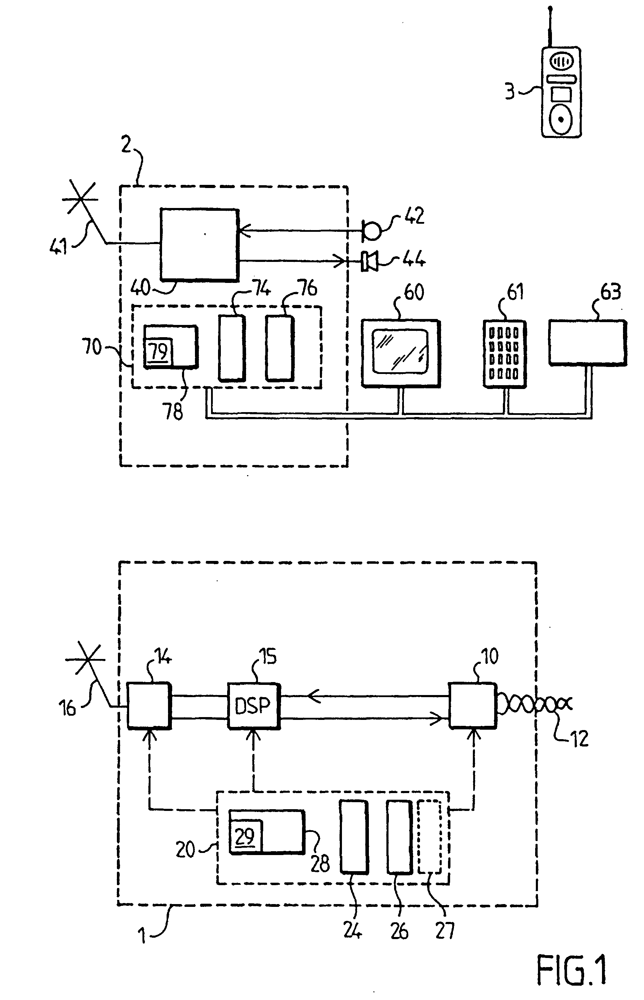

Sur la figure 1, le téléphone sans fil représenté est un téléphone répondant aux normes DECT. La référence 1 montre une station de base à laquelle un ou plusieurs dispositifs de combiné 2, 3, ... sont rattachés par voie radioélectrique. Cette station de base 1 comporte notamment un circuit de ligne 10 qui lui permet d'être raccordée au circuit commuté via une ligne téléphonique 12 et un circuit radioélectrique 14 qui autorise le dialogue avec les différents combinés 2, 3, ..., en émettant et en recevant des ondes par l'intermédiaire d'une antenne 16. Les circuits 10 et 14 sont reliés par l'intermédiaire d'un circuit 15 de traitement du signal formé autour d'un processeur de signal DSP. Tous ces éléments de la station de base 1 sont gérés par un ensemble à microprocesseur 20, qui, de façon usuelle, est notamment composé d'une mémoire vive 24, d'une mémoire morte 26 contenant des instructions de fonctionnement de l'appareil, et d'un processeur de gestion 28 qui contient une base de temps 29.

Dans le premier mode de réalisation de l'invention, l'ensemble à microprocesseur 20 comporte en plus une mémoire non volatile 27, par exemple une mémoire FLASH ou une mémoire EEPROM.

Seul le dispositif de combiné 2 est représenté en détail sur la figure 1, les dispositifs de combiné 3, ... pouvant être de structure identique. Il comporte un ensemble de communication 40 muni d'une antenne 41 qui lui permet de communiquer avec la station de base 1. Cet ensemble traite les informations en provenance du microphone 42, et fournit aussi des signaux pour un haut-parleur 44. Le combiné 2 comporte aussi un écran 60 sur lequel différentes informations sont susceptibles d'être affichées, un clavier 61, et une batterie d'alimentation 63. Un organe de gestion 70 est également prévu. Comme l'organe 20, il est doté d'une mémoire vive 74, d'une mémoire morte 76 contenant des instruction de fonctionnement et d'un processeur de gestion 78 qui contient une base de temps 79.

Dans le premier mode de réalisation de l'invention, une information de restitution d'horloge est transmise à l'entité de base 1 par le ou les entités de combiné 2, 3 ... lorsqu'ils détectent que l'entité de base perdu son horloge. Dans l'exemple qui va être décrit, une telle perte est détectée lorsqu'une desynchronisation base-combiné a lieu. En effet, les coupures secteur (qui empêchent la base de maintenir à jour son horloge, et qui entraînent donc la perte de cette horloge) sont une des causes de perte de synchronisation base-combiné. Le choix de ce critère permet de limiter au maximum les transmissions inutiles d'informations de restitution du combiné vers la base.

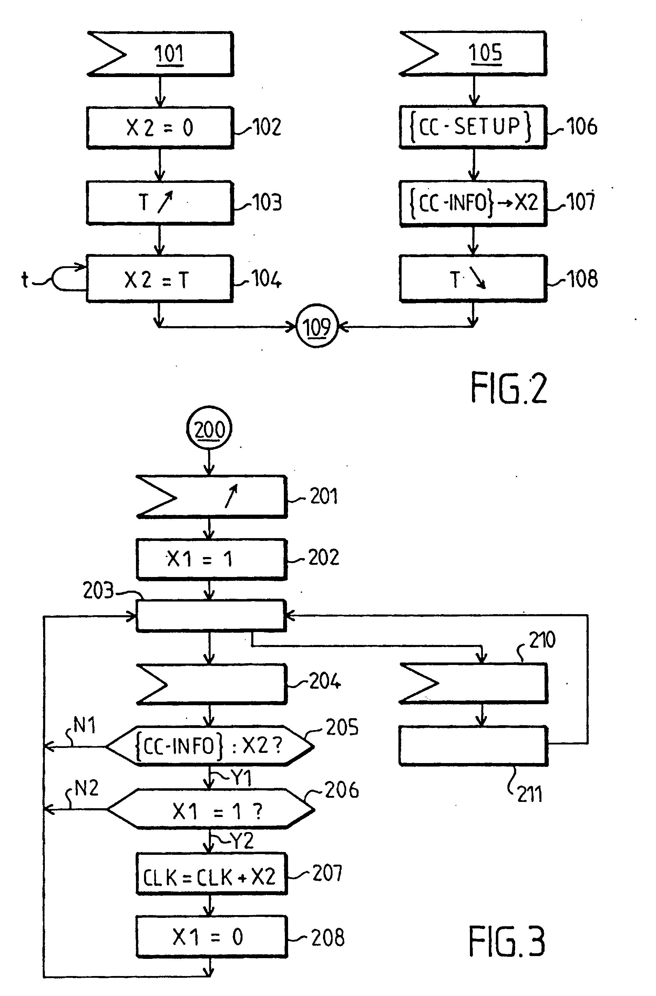

Sur la figure 2 on a représenté schématiquement le fonctionnement du combiné du point de vue de la gestion d'horloge.

Lorsqu'un combiné perd la synchronisation avec la base (case 101), il sait que celle-ci n'est peut-être plus alimentée, et qu'il y a donc un risque qu'elle perde son horloge. Le combiné maintient donc cette information à jour pour l'entité de base: à la case 102, il initialise une variable X2 (appelée information de restitution), et à la case 103 il commence à compter le temps T qui s'ecoule. La variable X2 est mise à jour régulièrement, par exemple toutes les secondes, tant que la synchronisation base-combiné n'est pas rétablie (ceci est symbolisé à la case 104 par la flèche t). Lorsque la synchronisation base-combiné est rétablie (case 105), le combiné établit à la case 106 un lien (dit lien propriétaire) avec l'entité de base. Par ce lien propriétaire, il envoie l'information de restitution X2 à l'entité de base (case 107). Et à la case 108, il arrête le comptage. Le fonctionnement se termine à la case 109.

Sur la figure 3 on a représenté schématiquement le fonctionnement de l'entité de base du point de vue de la gestion d'horloge.

A la case 200, l'entité de base est éteinte. A la case 201, elle est mise sous tension. A la case 202, l'entité de base effectue diverses opérations d'initialisation, notamment l'initialisation d'une variable X1 qui indique le besoin de mise à l'heure de l'entité de base. Puis à la case 203, la base se met en attente.

Lorsqu'un lien propriétaire est établi (case 204), l'entité de base teste la nature de ce lien (case 205). S'il s'agit d'un lien dédié à la gestion d'horloge (branche Y1 sur la figure), l'entité de base teste la variable X1 (case 206). Et si le contenu de la variable X1 est égal à 1 (branche Y2 sur la figure), elle met jour son horloge CLK stockée dans la mémoire non volatile 27 à partir de l'information de restitution X2 que le combiné lui a transmise par le lien propriétaire (case 207). Puis à la case 208, la base met la variable X1 à zéro.

Lorsqu'une mise à l'heure manuelle de la base est effectuée par l'utilisateur (case 210), la base met à jour son horloge CLK stockée dans la mémoire non volatile 27 (case 211).

A l'issue des cases 208 et 211, et lorsque les tests réalisés aux cases 205 et 206 sont négatifs (branches N1 et N2), le fonctionnement reprend à la case 203, c'est-à-dire que la base se remet en attente.

L'horloge de l'entité de base est ensuite maintenue à jour grâce à la base de temps 29 du processeur 28. Cette horloge est sauvegardée périodiquement dans la mémoire non volatile 27. Le contenu de la mémoire non volatile n'est pas effacé lorsqu'il y a une coupure de courant, de telle sorte qu'il suffit alors de lui ajouter le contenu de la variable X2 transmis par l'un des combinés pour restituer une horloge à jour.

Le second mode de réalisation de la présente invention permet de s'affranchir de l'utilisation d'une mémoire non volatile. Pour cela, chacune des deux entités est dotée d'une mémoire simple pour sauvegarder son horloge, et de moyens de comptage pour maintenir l'information sauvegardée à jour. Lorsque l'une des deux entités perd son horloge, l'autre entité lui transmet la sienne. Dans ce mode de réalisation, l'information de restitution est constituée par l'horloge elle-même.

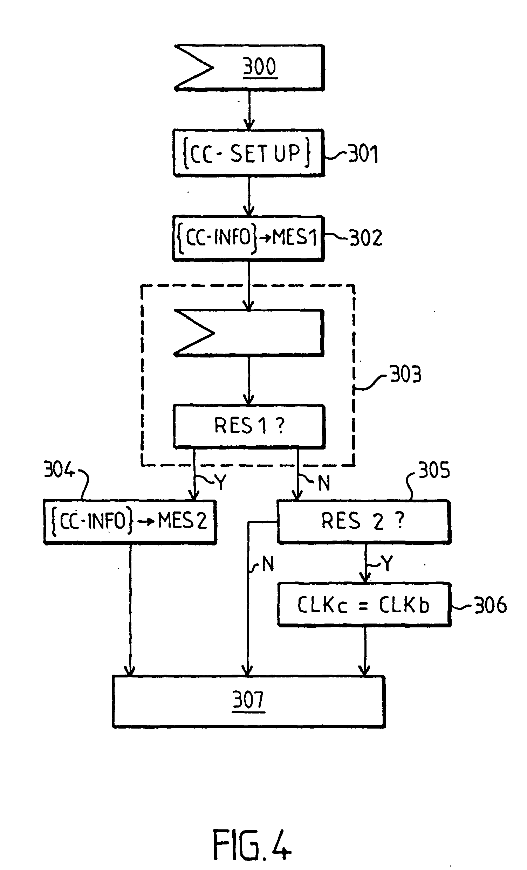

Sur la figure 4 on a représenté schématiquement le fonctionnement du combiné du point de vue de la gestion d'horloge, dans ce second mode de réalisation.

A la case 300 le combiné détecte une resynchronisation base-combiné. A la case 301, il établit donc un lien (dit lien propriétaire) avec la base. Par ce lien propriétaire, à la case 302, il transmet une demande d'heure (MES1) à la station de base. Lorsqu'il reçoit la réponse de la base, le combiné teste la nature de cette réponse. A la case 303, il teste si la réponse de la base est une demande d'heure (RES1). Dans ce cas, le combiné transmet son horloge à l'entité de base, à la case 304, par le lien propriétaire pré-établi (MES2). Sinon, il teste à la case 305 si la réponse de la base est un message (RES2) contenant une information de restitution. Si c'est le cas, il met à jour sa propre horloge CLKc à partir de l'information de restitution reçue CLKb (case 306). A l'issue des cases 304, 305 et 306, le fonctionnement se termine à la case 307.

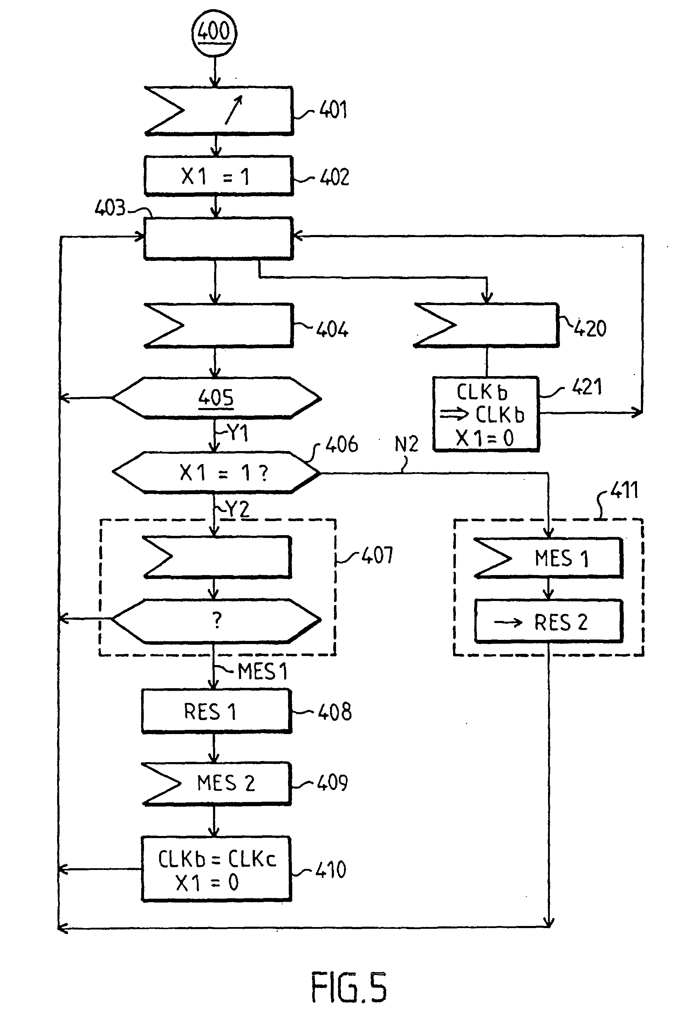

Sur la figure 5 on a représenté schématiquement le fonctionnement de la station de base du point de vue de la gestion d'horloge, dans ce second mode de réalisation.

A la case 400, la base est éteinte. A la case 401, elle est mise sous tension. A la case 402, la base effectue diverses opérations d'initialisation, notamment l'initialisation d'une variable X1 qui indique le besoin de mise à l'heure de l'entité de base. Puis, à la case 403, la base se met en attente.

Lorsqu'un lien propriétaire est établi (case 404), la base teste la nature de ce lien (case 405). S'il s'agit d'un lien dédié à la gestion d'horloge (branche Y1 sur la figure), la base teste la variable X1 à la case 406 (sinon, le fonctionnement reprend à la case 403):
Si le contenu de la variable X1 est égal à 1 (branche Y2 sur la figure), lorsqu'elle reçoit un message en provenance du combiné par ce lien propriétaire, l'entité de base teste la nature de ce message (case 407). S'il s'agit d'un message de demande d'heure (MES1), elle renvoie au combiné un message (RES1) de demande d'heure (case 408), et se met en attente de la réception d'un message contenant une information de restitution (MES2). Lorsqu'elle le reçoit (case 409), elle met jour son horloge CLKb à partir de l'information de restitution reçue CLKc, puis elle remet à zéro la variable X1 (case 410). Sinon, le fonctionnement reprend à la case 403.
Si le contenu de la variable X1 est égal à 0 (branche N2 sur la figure), lorsqu'elle reçoit un message de demande d'heure (MES1) en provenance d'un combiné, la base lui renvoie un message (RES2) contenant une information de restitution constituée par sa propre horloge (case 411).

Lorsqu'une mise à l'heure manuelle de la base est effectuée par l'utilisateur (case 420), la base met à jour son horloge CLKb, met à zéro la variable X1, et diffuse la nouvelle heure à tous les combinés, par exemple en établissant un lien propriétaire de diffusion d'horloge (case 421).

A l'issue des cases 410, 411 et 421, et lorsque les tests réalisés aux cases 405 et 407 sont négatifs, le fonctionnement reprend à la case 403, c'est-à-dire que la base se remet en attente.

Conformément à la norme DECT, et en reprenant la même terminologie, un lien propriétaire est par exemple établi de la façon suivante:
- un combiné envoie vers la base un message {CC-SETUP} dont l'élément d'information «BASIC-SERVICE» indique un "service call setup" (pour plus de précisions on se reportera aux paragraphes 9.3.3.1 cas D, 6.3.2.1 et 7.6.4 de la partie 5 de la norme);
- la base répond en renvoyant un message {CC-SETUP-ACK} (paragraphe 6.3.2.3 de la partie 5 de la norme);
- un lien propriétaire étant ainsi établi entre le combiné et la base, des messages {CC-INFO} peuvent être échangés entre eux. Ces messages contiennent par exemple une première référence qui indique le type du lien (un lien de gestion d'horloge, ou lien de diffusion d'horloge par exemple), une seconde référence qui indique la nature du message (messages MES1 et RES1 de demande d'heure ou messages MES2 et RES2 de transmission d'une information de restitution), et un champ d'informations qui contient le message lui-même, par exemple l'information de restitution dans le premier mode de réalisation et dans le cas des messages MES2 et RES2 (paragraphe 6.3.2.2 de la partie 5 de la norme).

Dans le cadre de la norme DECT, les pertes de synchronisation et les resynchronisations sont par exemple détectées de la façon suivante: la partie 3 de la norme DECT décrit au paragraphe 11.3.2 un état "Idle-Locked" qui est l'état le plus neutre dans lequel le combiné peut se trouver lorsqu'il est dans la zone couverte par la station de base. Cet état a pour objet de maintenir la synchronisation base-combiné. Ici, on considère donc qu'une sortie de l'état "Idle-Locked" correspond à une perte de synchronisation, et qu'une entrée dans l'état "Idle-Locked" correspond à une resynchronisation.

Bien que l'invention ait été décrite dans le cadre de la norme DECT (norme ETS 300 175 définie par l'ETSI), il est bien évident qu'elle est applicable à d'autres systèmes de téléphonie sans fil.

## Revendications

1. Téléphone sans fil comportant au moins une entité de base (1) dotée d'une horloge (CLK, CLKb), une entité de combiné (2, 3), et des moyens de correction d'horloge, **caractérisé en ce que** lesdits moyens de correction d'horloge comportent:
- des moyens (101, 300-303) de détection d'une perte de ladite horloge par l'entité de base,
- des moyens d'élaboration, par au moins une entité de combiné, d'une information de restitution (X2, CLKc) de ladite horloge,
- des moyens (107, 304) de transmission à l'entité de base, par l'entité de combiné, de ladite information de restitution.

2. Téléphone sans fil selon la revendication 1, **caractérisé en ce que**:
- ladite entité de base comporte une mémoire non volatile (27) de sauvegarde de ladite horloge,
- lesdits moyens d'élaboration de l'information de restitution comportent des moyens (103, 104) de calcul du temps (T) écoulé entre la détection de la perte de l'horloge et la transmission de l'information de restitution.

3. Téléphone sans fil selon la revendication 2, **caractérisé en ce que**:
- les moyens de détection de perte d'horloge comportent des moyens de détection de perte de synchronisation base-combiné,
- et les moyens de transmission sont commandés par des moyens de détection de resynchronisation base-combiné.

4. Téléphone sans fil selon la revendication 1, **caractérisé en ce que** l'entité de combiné est dotée d'une horloge (CLKc) esclave de celle de l'entité de base (CLKb), pour délivrer ladite information de restitution.

5. Téléphone sans fil selon la revendication 4, **caractérisé en ce que** l'entité de combiné comporte des moyens (303, 305) pour détecter la perte de ladite horloge esclave, et des moyens (301, 302) pour demander à l'entité de base de lui transmettre son horloge, dite horloge maître.

6. Téléphone sans fil selon la revendication 5, **caractérisé en ce que** les moyens de détection de perte d'horloge comportent des moyens de détection de resynchronisation base-combiné.

7. Entité de combiné (2, 3) destiné à être utilisé dans un téléphone sans fil selon l'une des revendications 1 à 6.

8. Entité de base (1) destinée à être utilisée dans un téléphone sans fil selon l'une des revendications 1 à 6.

9. Procédé de gestion d'horloges dans un téléphone sans fil comportant au moins une entité de base dotée d'une horloge (CLK, CLKb) et une entité de combiné (2, 3), **caractérisé en ce qu'**il consiste à:
- détecter (101, 300-303) une perte de ladite horloge par l'entité de base,
- élaborer, dans au moins une entité de combiné, une information de restitution (X2, CLKc) de ladite horloge,
- transmettre (107, 304) à l'entité de base, par l'entité de combiné, ladite information de restitution.

## Claims

1. A cordless telephone comprising at least a base station (1) with a clock (CLK, CLKb), a handset (2, 3) and clock correction means, **characterized in that** said clock correction means comprise:
- means (101, 300-303) for the base station to detect a loss of said clock,
- means for at least one handset to generate clock recovery information (X2, CLKc),
- means (107, 304) for the handset to transmit said recovery information to the base station.

2. A cordless telephone as claimed in claim 1, **characterized in that**
- said base station comprises a non-volatile back-up memory (27) of said clock,
- said recovery information generating means comprise calculation means (103, 104) for calculating the time (T) elapsed between the detection of the loss of the clock and the transmission of the recovery information.

3. A cordless telephone as claimed in claim 2, **characterized in that**
- the means for detecting a loss of clock comprise means for detecting a loss of synchronization of base station and handset, and
- the transmission means are controlled by means for detecting a resynchronization of base station and handset.

4. A cordless telephone as claimed in claim 1, **characterized in that** the handset has a clock (CLKc) slaved to that of the base station (CLKb) for supplying said recovery information.

5. A cordless telephone as claimed in claim 4, **characterized in that** the handset comprises means (303, 305) for detecting the loss of said slaved clock and means (301, 302) for asking the base station to transmit its clock called master clock to the handset.

6. A cordless telephone as claimed in claim 5, **characterized in that** the means for detecting the loss of clock comprise means for detecting a resynchronization of base station

7. A handset (2, 3) intended to be used in a cordless telephone as claimed in any one of the claims 1 to 6.

8. A base station (1) intended to be used in a cordless telephone as claimed in any one of the claims 1 to 6.

9. A method of managing clocks in a cordless telephone, comprising at least a base station having a clock (CLK, CLKb) and a handset (2, 3), **characterized in that** it comprises:
- detecting (101, 300-303) a loss of said clock by the base station,
- generating in at least one handset said clock recovery information (X2, CLKc),
- transmitting (107, 304) said recovery information to the base station by the handset.

## Patentansprüche

1. Schnurloses Telefon mit mindestens einer Basiseinheit (1), versehen mit einem Zeitgeber (CLK, CLKb), einer Handeinheit (2, 3) und Vorrichtungen zum Korrigieren des Zeitgebers, **dadurch gekennzeichnet, dass** die besagten Vorrichtungen zum Korrigieren der Zeitangabe enthalten:
- Verfahren (101, 300-303) zur Erkennung des Verlustes der Zeitangabe durch die Basiseinheit,
- Verfahren zur Entwicklung, von mindestens einer Einheit der Handgeräte, einer Information zur Wiederherstellung (X2, CLKc) des besagten Zeitangabe,
- Verfahren (107, 304) zur Übertragung der besagten Wiederherstellungsinformation von der besagten Handeinheit an die Basiseinheit.

2. Schnurloses Telefon nach Anspruch 1, **dadurch gekennzeichnet, dass**:
- die besagte Basiseinheit einen Permanentspeicher (27) zum Speichern des besagten Zeitgebers enthält,
- die besagten Verfahren zur Entwicklung der Wiederherstellungsinformation Verfahren (103, 104) zur Berechnung der zwischen der Erkennung des Verlustes des Zeitgebers und der Übertragung der Wiederherstellungsinformation vergangenen Zeit (T) enthalten.

3. Schnurloses Telefon nach Anspruch 2, **dadurch gekennzeichnet, dass**:
- die besagten Verfahren zur Erkennung des Zeitangabeverlusts Verfahren zur Erkennung des Synchronisationsverlustes von der Basis zum Handgerät enthalten,
- und die Übertragungsverfahren von Verfahren zur Erkennung der Resynchronisation von der Basis zum Handgerät gesteuert werden.

4. Schnurloses Telefon nach Anspruch 1, **dadurch gekennzeichnet, dass** die Handeinheit mit einem der Basiseinheit untergeordneten Zeitgeber (CLKc) ausgerüstet, um die besagte Wiederherstellungsinformation abzugeben.

5. Schnurloses Telefon nach Anspruch 4, **dadurch gekennzeichnet, dass** die Handeinheit verfahren aufweist (303, 305), um den Verlust des besagten untergeordneten Zeitgebers zu erkennen, und Verfahren (301, 302), um bei der Basiseinheit die Übertragung ihrer Zeitangabe vom sogenannten übergeordneten Zeitgeber anzufordern.

6. Schnurloses Telefon nach Anspruch 5, **dadurch gekennzeichnet, dass** die Verfahren zur Erkennung des Zeitgeberverlustes Verfahren zur Erkennung der Resynchronisation von der Basis zum Handgerät enthalten.

7. Handeinheit (2, 3) zur Verwendung mit einem schnurlosen Telefon nach einem der Ansprüche 1 bis 6.

8. Basiseinheit (1) zur Verwendung mit einem schnurlosen Telefon nach einem der Ansprüche 1 bis 6.

9. Verwaltungsmethode eines Zeitgebers in einem schnurlosen Telefon mit mindestens einer Basiseinheit, versehen mit einem Zeitgeber (CLK, CLKb) und einer Handeinheit (2, 3) **dadurch gekennzeichnet, dass** sie besteht aus der:
- Erkennung (101, 300-303) eines Verlustes des besagten Zeitgebers durch die Basiseinheit,
- Entwicklung, von mindestens einer Einheit der Handgeräte, einer Information zur Wiederherstellung (X2, CLKc) des besagten Zeitgebers,
- Übertragung (107, 304) der besagten Wiederherstellungsinformation von der besagten Handeinheit an die Basiseinheit.
